# EUROPEAN PATENT SPECIFICATION

(11) **EP 3 192 709 B1**
(45) Date of publication and mention of the grant of the patent: **18.12.2019**
(21) Application number: 16206307.7
(22) Date of filing: 22.12.2016
(51) Int. Cl.: B60R 25/0215

(54) **STEERING LOCK DEVICE**
LENKSCHLOSSVORRICHTUNG
DISPOSITIF DE VERROUILLAGE DE DIRECTION

(30) Priority: 15.01.2016 JP 2016006310
(43) Date of publication of application: 19.07.2017
(73) Proprietor: Kabushiki Kaisha Tokai Rika Denki Seisakusho, Ohguchi-cho Niwa-gun Aichi 480-0195 (JP)
(72) Inventor: NAKAMOTO, Yuji, Ohguchi-cho, Niwa-gun, Aichi 480-0195 (JP); SHIOZAKI, Daisuke, Ohguchi-cho, Niwa-gun, Aichi 480-0195 (JP); WASHINO, Shigeru, Toyota-shi, Aichi 471-8571 (JP)
(74) Representative: Viering, Jentschura & Partner mbB Patent- und Rechtsanwälte

(56) References cited:
- EP-A1- 1 621 424
- EP-A1- 2 821 295
- EP-A2- 1 953 050
- CN-A- 103 332 167
- FR-A1- 2 957 317

## Description

The present disclosure relates to a steering lock device, more specifically, to a vehicle electric steering lock device.

JP-A-2015-214228 discloses a conventional vehicle electric steering lock device. The vehicle electric steering lock device includes a housing which is fixedly mounted on a steering column and accommodates an electric motor and a lock bar. The electric motor reciprocally moves the lock bar between an unlocking position where the lock bar is disengaged from a steering shaft in the steering column to a locking position where the lock bar is engaged with the steering shaft to mechanically lock and immobilize the steering shaft.

The vehicle electric steering lock device includes a connector exposed to the outside the steering lock device and coupled to an electric cable for supplying electric power or signal for driving the electric motor. If the connector were broken by someone for tampering purposes, that person would be able to enter his/her finger or a picking tool into the housing to move the lock bar back to the unlocking position.

Further examples of prior art are EP 1 621 424 A1 and EP 2 821 295 A1

EP 1 621 424 A1discloses a steering lock, wherein the steering lock includes a cover on which a support structure for supporting a lock mechanism is integrally formed, wherein the lock mechanism is attached to the cover to assemble a first subunit, wherein a steering lock ECU is attached to an ECU case to assemble a second subunit, wherein the first subunit is attached to the second subunit to assemble a lock unit, wherein the lock unit is attached to the housing, wherein a bolt fastens the lock unit and the housing to each other.

EP 2 821 295 A1discloses an electric steering lock device, wherein a motor cover includes an edge portion located outside an inner side surface of a frame cover with the motor cover being disposed inside a housing chamber, configured to push the frame cover wider when the frame cover is mounted onto a frame, and configured to be pressed by the frame cover from an opened surface of the frame with the frame cover being mounted on the frame.

It is an object of the present disclosure to improve the anti-tampering characteristics of a steering lock device.

The present invention provides a steering lock device according to independent claim 1. Further embodiments of the present invention are described in the dependent claims.

With the structure described in the independent claim, the protector interferes with tampering and protects inner components from tampering. This increases the anti-tampering characteristics of the steering lock device. For example, the bent portion of the protector immediately comes in contact with the housing when the protector is deformed and/or displaced by a tampering impact. This retains the protector in the housing in an assembled state, and the protector continuously protects from the inner components from tampering. Therefore it is difficult for someone to access an inner component for tampering purposes.

Further, with the structure described in the independent claim, the protector would be able to block and interfere with physical tampering from outside even if the connector were broken by someone for tampering purposes. This increases the anti-tampering characteristics of the steering lock device.

In one or more aspects of the present disclosure, the protector is fixedly, preferably resiliently, coupled to the certain component in a state in which the protector is non-contact with the housing and spaced from the housing with a gap therebetween. With this structure, it is possible to fixedly attach the protector directly to the certain component other than the housing. The bent portion of the protector comes in contact with the housing when a tampering impact displaces and/or deforms the protector in the housing. This retains the protector in the housing in its original installation position, or the initial position.

In one or more aspects of the present disclosure, the protector is arranged proximity to an inner surface of a side wall of the housing. With this structure, the protector arranged proximal to the side wall of the housing immediately interferes with tampering directed to the opening of the housing. This increases the anti-tampering characteristics of the steering lock device.

In one or more aspects of the present disclosure, the protector includes a barrier panel arranged proximity to an inner surface of a side wall of the housing in a side-by-side manner, and the barrier panel and the bent portion are integrally formed as a one-piece member with the bent portion being non-parallel to the barrier panel. With this structure, the bent portion of the protector firmly is able to be engaged with the housing when tampering deforms and/or displaces the protector in the housing.

In one or more aspects of the present disclosure, the protector is arranged such that a portion of the protector comes in contact with and is supported by an electric motor accommodated in the housing when the protector is displaced and/or deformed by a tampering impact from outside the housing. With this structure, the thickness of the wall corresponding to the inner surface of the housing may be reduced. This reduces weight/size of the steering lock device.

Other aspects and advantages of the embodiments will become apparent from the following description, taken in conjunction with the accompanying drawings, illustrating by way of example the principles of the invention.

The embodiments, together with objects and advantages thereof, may best be understood by reference to the following description of the presently preferred embodiments together with the accompanying drawings in which:
Fig. 1 is a perspective view of a steering lock device according to one embodiment;
Fig. 2 is a cross-sectional view of the steering lock device of Fig. 1;
Fig. 3 is an exploded perspective view of the steering lock device of Fig. 1;
Fig. 4 is a perspective view of a locking mechanism of the steering lock device;
Fig. 5 is a perspective view of a protector of the steering lock device;
Fig. 6 is a schematic view showing components arranged in an uncovered housing of the steering lock device;
Fig. 7 is a perspective view of the uncovered housing;
Fig. 8 is a schematic view explaining a protective action of the protector against tampering;
Fig. 9 is a schematic view of a housing of a steering lock device according to another embodiment.

One embodiment of a steering lock device will now be described.

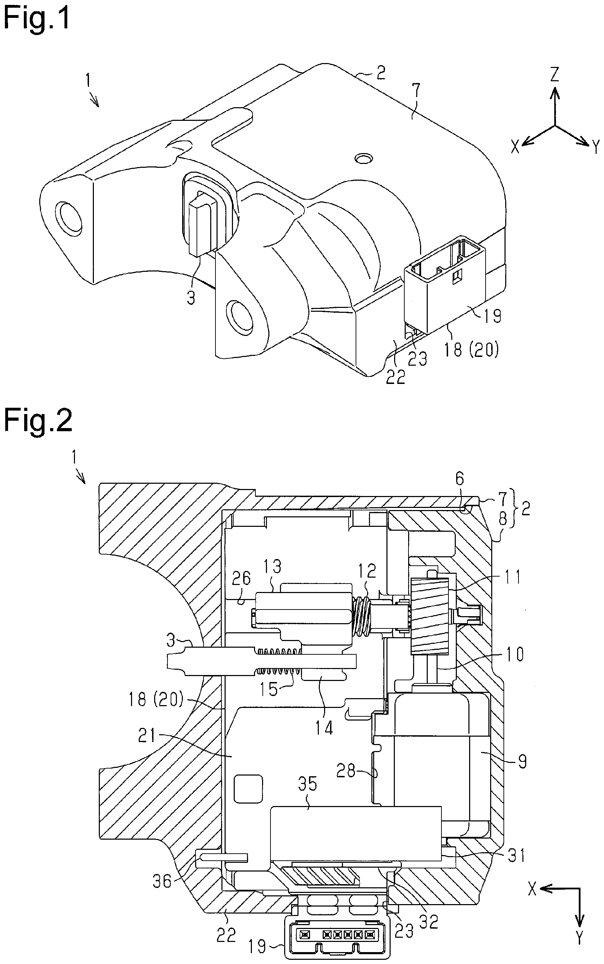

As illustrated in Fig. 1, a steering lock device 1 includes a housing 2 and a lock bar 3. The housing 2 may include a mounting surface 2a fixedly mounted on a steering column enclosing a steering shaft (unillustrated). The lock bar 3 is configured to mechanically engage with the steering shaft. The steering lock device 1 may be an electric steering lock device configured to electrically move the lock bar 3 and adapted to use with a vehicle. The housing 2 is made of an alloy, preferably, a magnesium alloy. The housing 2 may be formed by alloy die-casting.

As illustrated in Fig. 2, the housing 2 includes an enclosure body 7 having a component installation port 6 and a pluggable cover 8 for covering and concealing the component installation port 6. An electric motor 9 is arranged in the housing 2 and serves as a driving source for locking and unlocking operations of the steering lock device 1. The electric motor 9 includes a motor shaft 10 extending in a widthwise direction of the steering lock device 1, which is shown by Y axis in Fig, 2, when the electric motor 9 is installed into the housing 2. The electric motor 9 is operably coupled to a rotary shaft 12 via a gear set, such as a worm gear 11 fixed on the motor shaft 10 and a worm wheel fixed on or integrally formed with the rotary shaft 12. The drive shaft 12 is coupled to a slider 13 via a rotation-to-linear motion converting mechanism, which may be a combination of a male screw of the rotary shaft 12 and a female screw of the slider 13 or may be a ball-screw mechanism. The slider 13 linearly reciprocates in a direction (e.g., X axis) intersecting, preferably orthogonal to, the axial direction of the motor shaft 10 (e.g., Y axis), depending on the rotation direction of the electric motor 9. The slider 13 includes a block-shaped projection 14 functioning as a seat for a spring 15 and configured to be coupled to the lock bar 3 so that the lock bar 3 is linearly movable relative to the slider 13. The spring 15 as a biasing element is arranged between the block-shaped projection 14 of the slider 13 and the lock bar 3 to bias the lock bar 3 in a lock direction, which may be the X axial direction. The spring 15 allows the lock bar 3 to resiliently move back from a locking positon to an unlocking position regardless of operations of the electric motor 9.

When the electric motor 9 rotates in one direction, for example a clockwise direction, the lock bar 3 moves from the unlocking position to the locking position and outwardly projects from the housing 2 as illustrated in Figs. 1 and 2. The lock bar 3 at the locking position mechanically engages with a recess or groove of a steering shaft (unillustrated). This locks and immobilizes the steering shaft and may be referred to as a locking state of the steering lock device 1.

When the electric motor 9 rotates in the other direction, for example a counterclockwise direction, the lock bar 3 moves and retracts from the locking position to the unlocking position. The lock bar 3 at the unlocking position disengages from the steering shaft. This unlocks the steering shaft and may be referred to as an unlocking state of the steering lock device 1. When the lock bar 3 is fully moved back to the unlocking position, the locking bar 3 may be entirely located inside the housing 2.

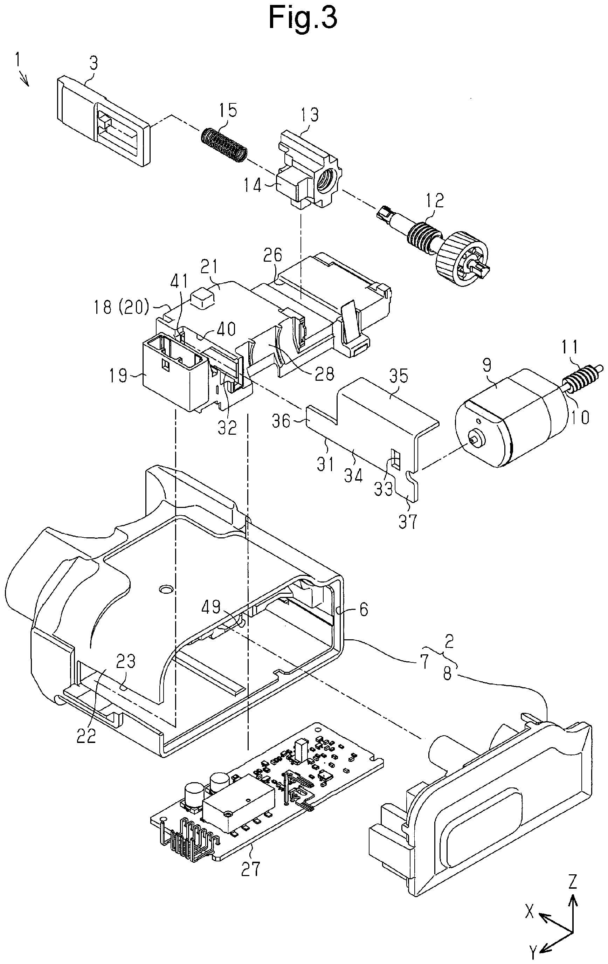

As illustrated in Fig. 3, the housing 2 includes a side wall 22 having an opening 23 which may be a slit continuous to the component installation port 6. A certain component 18, which may be installed into the housing 2 through the component installation port 6, is coupled to the housing 2. The certain component 18 includes an inner portion 21 accommodated in the housing 2 and an outer portion, such as a connector 19, outwardly extending through the opening 23 and exposed on the outside of the housing 2. The certain component 18 is a mounting base 20 and may be a one-piece component in which the connector 19 and the inner portion 21 are integrally formed. The certain component 18 is formed from a synthetic resin. The opening 23 may be separated from the component installation port 6.

The inner portion 21 of the mounting base 20 includes an upper surface and a bottom surface. The upper surface of the inner portion 21 includes a linear guide 26, which may be a groove. The linear guide 26 makes sliding contact with the slider 13 to guide the linearly reciprocating motion of the slider 13. The bottom surface of the inner portion 21 is shaped to hold a circuit board 27, which includes electric and electrical circuit elements of the steering lock device 1 are mounted. The circuit board 27 includes one or more terminal pins, such as an electric power reception pin for receiving electric power from outside the housing 2 and an electric signal communication pin for receiving and/or feeding electric signals to and from outside the housing 2. The inner portion 21 of the mounting base 20 includes a motor mounting portion 28 on which the electric motor 9 is mounted. The motor mounting portion 28 may be a part of a side-end face of the inner portion 21 facing toward the pluggable cover 8.

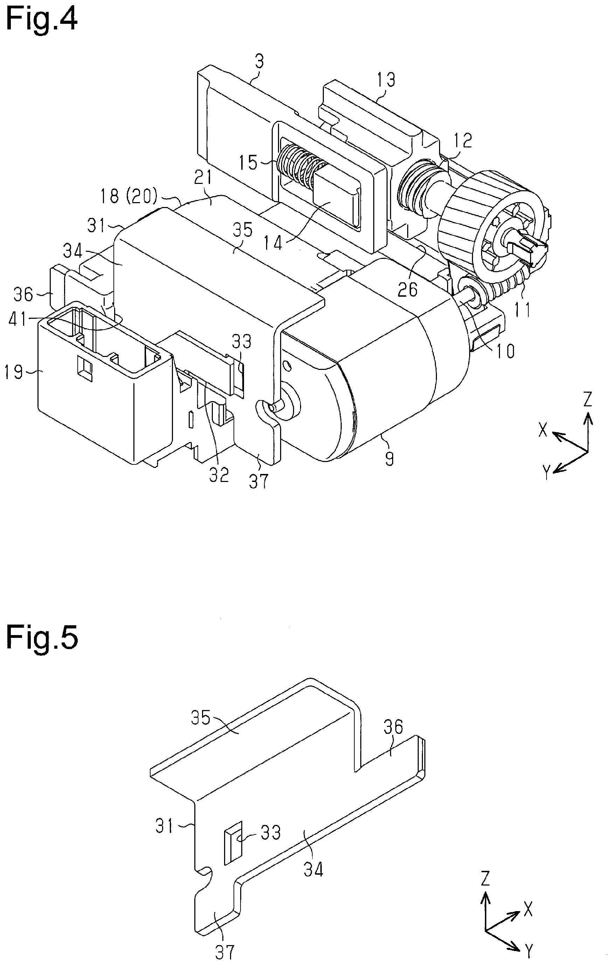

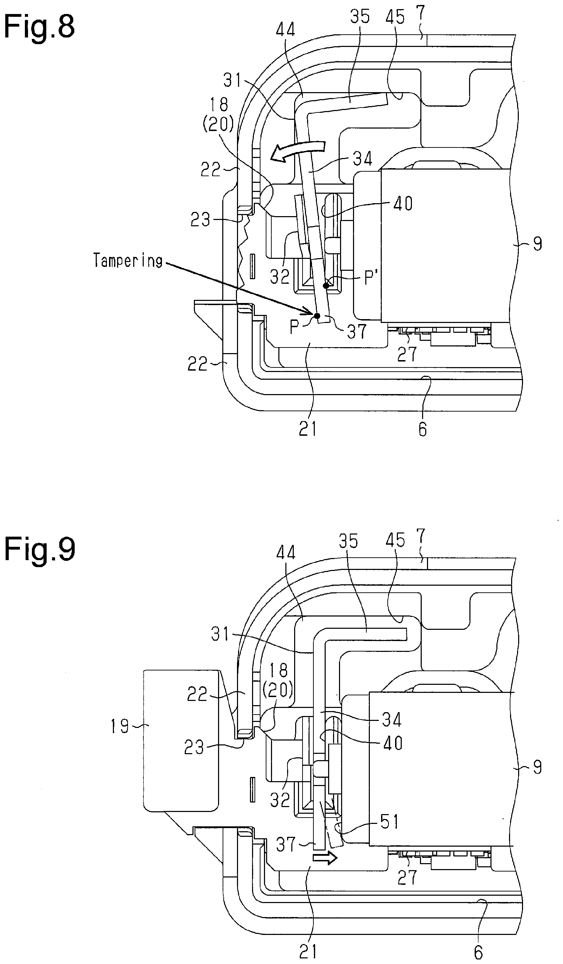

As illustrated in Figs. 3 and 4, a protector 31 is arranged inside the housing 2, for example, at a position corresponding to the opening 23. The protector 31 is configured to interfere with tampering (illustrated by the black arrow of Fig. 8) to the 7 certain component 18, in particular, to the connector 19, from outside the housing 2. The protector 31 is fixedly coupled to the mounting base 20, in particular, the inner portion 21. In one or more embodiments, a hook 32 of the certain component 18 engages with an engagement hole 33 of the protector 31 in a snap-fit manner.

As illustrated in Figs. 3 to 5, the protector 31 includes a first tab 35 functioning as a bent portion configured to retain the protector 31 in the housing 2 in an assembled state regardless of deformation and/or displacement of the protector 31 caused by a tampering impact applied to the certain component 18 from outside the housing 2. The protector 31 is arranged in the housing 2 in a manner such that the first tab 35 is spaced from the housing 2 in a non-contact manner. The protector 31 includes a barrier panel 34 arranged proximity to, preferably parallel to, an inner surface of the side wall 22 of the housing 2 in a non-contact manner. The barrier panel 34 and the first tab 35 are integrally formed as a one-piece member with the first tab 35 being non-parallel to the barrier panel 34. The barrier panel 34 may be a flat panel extending in a heightwise direction of the steering lock device 1 (e.g., Z axis). The first tab 35 may be a flat, rectangular tab extending in a direction (e.g., Y axis) orthogonal to the barrier panel 34. The first tab 35 may be referred to as a bent tab. The first tab 35 may be an uppermost portion of the protector 31.

The protector 31 includes a second tab 36 and a third tab 37, each of which may be a flat plate co-planar with the barrier panel 34. The tabs 36 and 37 are arranged at opposite positions of the barrier panel 34 and are integrally formed with the barrier panel 34. The tabs 36 and 37 extend in mutually different directions. The tabs 36 and 37 may be referred to as unbent tabs. The second tab 36 may be an innermost portion of the protector 31 in the X-axis direction shown in Fig. 3, namely, in the component installation direction. The third tab 37 may be a lowermost portion of the protector 31 in a direction orthogonal to the component installation direction.

As illustrated in Fig. 3, the protector 31 is inserted in a groove 40 of the mounting base 20 so as to be fixedly coupled to the mounting base 20. When coupling the protector 31 to the mounting base 20, the second tab 36 is inserted in and makes sliding contact with a slit 41 of the mounting base 20, and the hook 32 of the mounting base 20 hooks into the engagement hole 33 of the protector 31. This firmly couples the protector 31 to the mounting base 20. The third tab 37 is engaged with a part of the side-end face of the inner portion 21 to position the protector 31 relative to the mounting base 20. As illustrated in Fig. 2, a distal end of the second tab 36 may be received in a recess of the innermost wall of the housing 2 in a non-contact manner. The second tab 36 may be referred to as an insertion tab and the third tab 37 may be referred to as an engagement tab.

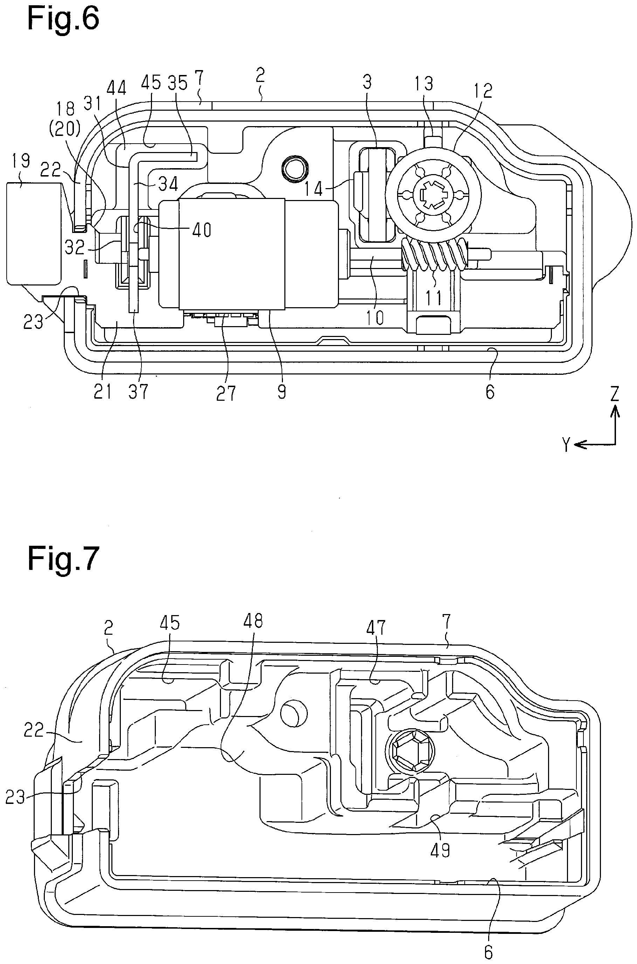

As illustrated in Fig, 6, the protector 31 is arranged proximity to an inner surface of the side wall 22 of the housing 2 (the enclosure body 7) in a state in which the certain component 18 (the mounting base 20) is accommodated in the housing 2. The protector 31 is spaced from the housing 2 with a gap 44 therebetween in a state in which the protector 31 fixedly coupled to the certain component 18 is accommodated in the housing 2. The first tab 35 of the protector 31 is proximity to and separated from an inner surface 45 of the housing 2. The position of the first tab 35 is determined such that the first tab 35 comes in direct contact with the inner surface 45 in a case in which tampering from outside the housing 2 displaces and/or deforms the protector 31. The inner surface 45 may be a cut-out portion in a ceiling surface of the housing 2 to form the gap 44. If the protector 31 has an L-shaped cross section as illustrated in Fig. 6, the inner surface 45 may be part of an L-shaped slot in the housing 2, which is tailored to loosely accommodate at least the first tab 35 of the L-shaped protector 31.

As illustrated in Fig. 7, the enclosure body 7 includes a first compartment 47 and a second compartment 48 defined by one or more inner partitioning walls of the enclosure body 7. The first compartment 47 is configured to accommodate a first subset of components which includes the lock bar 3, the rotary shaft 12 and the slider 13. The first subset of components may be referred to as mechanical locking components. The bottom of the first compartment 47 includes a guide 49 for guiding the linearly reciprocating motion of the slider 13. The guide 49 may be a straight slot corresponding to the linear guide 26 of the inner portion 21 of the mounting base 20.

The second compartment 48 is configured to accommodate a second subset of components which includes the mounting base 20 and the circuit board 27. The second subset of components may be referred to as driving source components. The second compartment 48 communicates with the opening 23 of the housing 2. In a state in which the mounting base 20 is accommodated in the second compartment 48, the connector 19 of the mounting base 20 outwardly extends through the opening 23 and is exposed on the outside of the housing 2.

The operation and effects of the steering lock device 1 and the protector 31 will now be described.

Fig. 8 illustrates tampering in which the connector 19 is broken and removed from the housing 2 and a picking tool is inserted into the housing 2. The tampering is interfered by the protector 31 located between the connector 19 and the internal components (the mechanical locking components and the driving source components). The protector 31 protects the internal components against the tampering. This improves the anti-tampering characteristics of the steering lock device 1 against unauthorized physical unlocking operations.

The protector 31 is not directly fixed on the housing 2 because of difficulty in forming a resilient coupler for the protector 31 in the housing 2 by alloy die casting and/or in assembling the internal components to the housing 2. In one or more embodiments, the protector 31 is fixed on the mounting base 20 and is separated from the housing 2 with the gap 44. When the protector 31 is deformed and/or displaced due to the tampering, the deformed or displaced protector 31 comes in direct contact with the housing 2 and is held by the housing 2. Therefore the protector 31 is retained in the housing 2 and continuously protects the internal components against the tampering.

A certain protective member that is not directly fixed on the housing 2 may be forcibly removed from an initial installation position of the protection means in the housing 2 by someone using a picking tool to access the mechanical locking components. With this situation, the protection means may not continuously protect the internal components against the tampering.

To cope with the situation, the protector 31 is a bent plate having an L-shaped cross section and including the first tab 35. The first tab 3 comes in direct contact with the housing 2 in a case in which external force deforms and/or displaces the protector 31 from its initial installation position. For example, when external force of tampering is applied on a lower portion P of the protector 31, which may be the third tab 37, the protector 31 may be rotatably displaced about a fulcrum P' from its initial installation position as indicated by the outlined arrow in Fig. 8. Immediately after the beginning of the displacement of the protector 31, the first tab 35 comes in direct contact with the inner surface 45 of the housing 2 and retains the protector 31 in the housing 2 in an assembled state. This minimizes the displacement of the protector 31 and improves the anti-tampering characteristics of the steering lock device 1.

In one or more embodiments, the hook 32 of the mounting base 20 generates a resilient biasing force that returns the protector 31 to the initial installation position. This improves the anti-tampering characteristics of the steering lock device 1.

The certain component 18, which is the mounting base 20 including the connector 19 exposed outside the housing 2, is likely to be a subject to tampering. As the protector 20 is arranged inside the housing 2 at a position corresponding to the connector 19, if the connector 19 were broken and removed by tampering, the protector 31 would be able to interfere with the tampering. This protects the steering lock device 1 from unauthorized unlocking operations.

In one or more embodiments, the protector 31 is fixedly coupled to the certain component 18 (the mounting base 20) accommodated in the housing 2 in a state in which the protector 31 is spaced from the housing 2 with the gap 44 therebetween. The first tab 35 of the protector 31 comes in direct contact with the housing 2 when external impact is applied on the protector 31 from outside the housing 2. This retains the protector 31 in its initial installation position in the housing 2.

The protector 31 is arranged proximity to the inner surface of the side wall 22 of the housing 2, preferably, proximity to the opening 23. The protector 31 may immediately cope with tampering. This improves the anti-tampering characteristics of the steering lock device 1.

The protector 31 includes a barrier panel 34 arranged proximity to, preferably parallel to, the inner surface of the side wall 22 of the housing 2 in a side-by-side manner, preferably in a non-contact manner. The barrier panel 34 and the first tab 35 are integrally formed as a one-piece member with the first tab 35 being non-parallel to, preferably orthogonal to, the barrier panel 34. When external impact of tampering is applied on the protector 31 to displace and/or deform the protector 31, the first tab 35 comes in direct contact with the inner surface 45 of the housing 2. This firmly retains the protector 31 in the housing 2.

In one or more embodiments, the protector 31 and the mounting base 20 include the engagement hole 33 and the hook 32. The mechanical engagement of the hook 32 with the engagement hole 33 fixedly couples the protector 31 to the mounting base 20.

In one or more embodiments, the protector 31 and the mounting base 20 include the second tab 36 and the slit 41. The second tab 36 is inserted in the slit 41. The sliding contact of the second tab 36 with the slit 41 fixedly couples the protector 31 to the mounting base 20.

The steering lock device 1 according to the above embodiment may be modified as follows.

In another embodiment illustrated in Fig. 9, the protector 31 is arranged so that the protector 31 comes in contact with the electric motor 9 in the housing 2 when external impact of tampering displaces and/or deforms the protector 31. For example, the electric motor 9 is arranged in close proximity to the protector 31 so that the protector 31 comes in contact with an end surface 51 of the electric motor 9 in the housing 2 when external impact of tampering displaces and/or deforms the protector 31. The embodiment of Fig. 9 has the same or corresponding effects discussed in relation to Fig. 8.

In the embodiment of Fig. 9, the lowermost portion 37 of the protector 31 may come in contact with the electric motor 9 before the first tab 35 comes in contact with the inner surface 45 of the housing 45. With this configuration, the thickness of the wall corresponding to the inner surface 45 of the housing 2 may be reduced. This reduces weight/size of the steering lock device accordingly. It will be apparent to those skilled in the steering lock field from the present disclosure that the protector 31 and the first tab 35 may substantially simultaneously come in contact with the electric motor 9 and the inner surface 45 of the housing 45, respectively, for the weight/size reduction purposes.

It is preferable that the initial installation position of the protector 31 is a positon proximity to the opening 23. However, it will be apparent to those skilled in the steering lock field from the present disclosure that the initial installation position of the protector 31 may be changed to other positions inside the housing 2. For example, the protector 31 may be arranged between a weak portion of the outer surface of the steering lock device 1 and the locking mechanism (mechanical locking components). It is preferable that the protector 31 is of a bent shape as discussed in the embodiments. However, it will be apparent to those skilled in the steering lock field from the present disclosure that the protector 31 may have other shapes as long as the protector 31 includes a bent portion.

It is preferable that the protector 31 is separated from the housing 2 with the gap 44 therebetween. It will be apparent to those skilled in the steering lock field from the present disclosure that the protector 31 may be installed into the housing 2 without forming the gap 44.

It is preferable that the first tab 35 of the protector 31 is orthogonal to the barrier panel 34. However, the first tab 35 is not limited to be orthogonal to the barrier panel 34 as long as the first tab 35 is non-parallel to the barrier panel 34.

It is preferable that the first tab 35 of the protector 31 is of plate shape. However, it will be apparent to those skilled in the steering lock field from the present disclosure that the first tab 35 may be one or more rod-shaped projections.

It is preferable that the first tab 35 is an uppermost portion of the protector 31. However, it will be apparent to those skilled in the steering lock field from the present disclosure that the first tab 35 may be formed at other portions of the protector 31.

It is preferable that the inner surface 45 of the housing 2 is a part of the ceiling surface of the housing 2. However, it will be apparent to those skilled in the steering lock field from the present disclosure that the inner surface 45 may be other inner surface of the housing 2 other than the ceiling surface as long as the protector 31 comes in contact with the inner surface 45.

It will be apparent to those skilled in the steering lock field from the present disclosure that the certain component 18 is not limited to the mounting base 20 and may be other component accommodated in the housing 2.

In the illustrated embodiment, the outer portion of the mounting base 20 is or includes the connector 19 configured to receive a jack or plug for connecting electric wire(s). It will be apparent to those skilled in the steering lock field from the present disclosure that the outer portion of the mounting base 20 is not limited to the connector 19. For example, the outer portion of the mounting base 20 may be a portion that has physical strength less than that of the housing 2.

The position of the opening 23 (the connector 19) is not limited to the side wall 22 of the housing 2. It will be apparent to those skilled in the steering lock field from the present disclosure that the position of the opening 23 (the connector 19) relative to the housing 2 may be changed as needed.

It will be apparent to those skilled in the steering lock field from the present disclosure that the shape and size of the housing 2 may be changed as needed.

It will be apparent to those skilled in the steering lock field from the present disclosure that suitable means for fixing the protector 31 to the mounting base 20 may be used in addition to or in place of the snap fit engagement of the hook 32 and the engagement hole 33.

The locking mechanism (mechanical locking components) may be changed as long as it includes the lock bar 3.

The driving source components are not limited to the mounting base 20 and the circuit board 27. In some implementations, the driving source components include at least the electric motor 9.

It is preferable that the steering lock device 1 is of electric type. However, it will be apparent to those skilled in the steering lock field from the present disclosure that the steering lock device 1 may be changed to a mechanical type in which a user manually switches the lock bar between the lock and unlock positions.

The steering lock device 1 is not limited to be mounted to a vehicle. For example, the steering lock device 1 may be applied to devices and appliances other than vehicles.

It will be apparent to those skilled in the steering lock field from the present disclosure that the protector 31 is capable of protecting not only from unauthorized unlocking of the steering lock device 1 but from unauthorized locking of the steering lock device 1.

The preset disclosure encompasses implementations described below. Reference characters are added to facilitate understanding of the relationship between the above embodiments and the implementations.

In one or more implementations, the protector (31) closes the opening (23) from inside the housing (2). This structure increases the anti-tampering characteristics of the steering lock device. For example, the opening (23) is sandwiched by the outer portion (19) of the certain component (18) and the protector (31) from outside and inside the housing (2). This makes it difficult for someone to access through the opening (23) into the housing (2). In addition, the protector (31) immediately interferes with tampering even when the outer portion (19) of the housing (2) is broken and removed.

In one or more implementations, at least the protector (31) and the certain component (18) are assembled together to form a single assembly prior to installing the protector (31) into the housing (2). This facilitates assembling of the steering lock device (1).

In one or more implementations, the protector (31) including a bent portion (35) is of a bent shape that increases opportunities for the protector (31) to abut against the housing (2). With this structure, it is difficult for someone to disassemble the protector (31) from the housing (2) to access deep into the housing (2) through the opening (23) even when that person physically breaks the outer portion (19) of the certain component (18).

In one or more implementations, the certain component (18) includes an engaging member (32) that engages with the protector (31) to position the protector (31) at an initial installation position. It is preferable that the engaging member (32) is configured to resiliently deform and resiliently bias the protector (31) to the initial installation position of the protector (31) when the bent portion (35) of the protector (31) comes in contact with the housing (2).

## Claims

1. A steering lock device (1) comprising:
a housing (2) including an opening (23); and
a mounting base (20) coupled to the housing (2), the mounting base (20) including an inner portion (21) accommodated in the housing (2) and a connector (19) outwardly extending through the opening (23) and exposed on the outside of the housing (2),
the steering lock device (1) being **characterized by**
a protector (31) fixedly coupled to the mounting base (20) and arranged inside the housing (2) at a position corresponding to the opening (23) to interfere with tampering to the mounting base (20) from outside the housing (2), wherein the protector (31) and the mounting base (20) are assembled together to form a single assembly,
wherein the protector (31) is fixedly coupled to the mounting base (20) in a state in which the protector (31) is not in contact with the housing (2) and spaced from the housing (2) with a gap (44) therebetween,
wherein the protector (31) includes a bent portion (35) configured to, in an assembled state of the protector (31) and the housing (2), come in direct contact with an inner surface (45) of the housing (2) immediately after the beginning of a deformation and/or displacement of the protector (31) to thereby retain the protector (31) in the housing (2) in the assembled state regardless of deformation and/or displacement of the protector (31) caused by a tampering impact applied to the mounting base (20) from outside the housing (2), and
wherein the protector (31) is arranged, on an upper surface of the inner portion (21) of the mounting base (20), between the connector (19) and a locking mechanism.

2. The steering lock device (1) according to claim 1, wherein the protector (31) is arranged proximal to an inner surface of a side wall (22) of the housing (2).

3. The steering lock device (1) according to any one of the preceding claims, wherein the protector (31) includes a barrier panel (34) arranged proximal to an inner surface of a side wall (22) of the housing (2) in a side-by-side manner, wherein the barrier panel (34) and the bent portion (35) are integrally formed as a one-piece member with the bent portion (35) being non-parallel to the barrier panel (34).

4. The steering lock device (1) according to any one of the preceding claims, wherein an electric motor (9) is accommodated in the housing (2) and is arranged in close proximity to the protector (31) so that a portion (37) of the protector (31) comes in contact with an end surface (51) of the electric motor (9) in the housing (2) and is supported by the electric motor (9) when the protector (31) is displaced and/or deformed by a tampering impact from outside the housing (2).

5. The steering lock device (1) according to any one of the preceding claims, wherein the protector (31) is inserted in a groove (40) on the upper surface of the inner portion (21) of the mounting base (20).

## Patentansprüche

1. Lenkungssperrvorrichtung (1), aufweisend:
ein Gehäuse (2), das eine Öffnung (23) aufweist, und
eine Montagebasis (20), die mit dem Gehäuse (2) verbunden ist, wobei die Montagebasis (20) einen inneren Abschnitt (21), der in dem Gehäuse (2) aufgenommen ist, und ein Verbindungsstück (19) aufweist, das sich durch die Öffnung (23) nach außen erstreckt und an der Außenseite des Gehäuses (2) freiliegend ist,
wobei die Lenkungssperrvorrichtung (1) **gekennzeichnet ist durch**
eine Schutzvorrichtung (31), die mit der Montagebasis (20) fest verbunden ist und innerhalb des Gehäuses (2) an einer Position angeordnet ist, die zu der Öffnung (23) korrespondiert, um eine Sabotage an der Montagebasis (20) von außerhalb des Gehäuses (2) zu behindern, wobei die Schutzvorrichtung (31) und die Montagebasis (20) zusammengebaut sind, um eine einzelne Baugruppe zu bilden,
wobei die Schutzvorrichtung (31) mit der Montagebasis (20) fest verbunden ist in einem Zustand, in welchem die Schutzvorrichtung (31) nicht in Kontakt ist mit dem Gehäuse (2) und zu dem Gehäuse (2) im Abstand ist mit einem Spalt (44) dazwischen,
wobei die Schutzvorrichtung (31) einen angewinkelten Abschnitt (35) aufweist, der konfiguriert ist, um, in einem zusammengebauten Zustand der Schutzvorrichtung (31) und des Gehäuses (2), mit einer inneren Fläche (45) des Gehäuses (2) in einen direkten Kontakt zu kommen unmittelbar nach dem Beginn einer Verformung und/oder einer Verschiebung der Schutzvorrichtung (31), um dadurch die Schutzvorrichtung (31) in dem Gehäuse (2) in dem zusammengebauten Zustand zu sichern unabhängig von einer Verformung und/oder einer Verschiebung der Schutzvorrichtung (31), die verursacht wird/werden mittels einer Sabotageeinwirkung, die auf die Montagebasis (20) von außerhalb des Gehäuses (2) ausgeübt wird, und
wobei die Schutzvorrichtung (31) zwischen dem Verbindungsstück (19) und einem Verriegelungsmechanismus angeordnet ist an einer oberen Fläche des inneren Abschnitts (21) der Montagebasis (20).

2. Lenkungssperrvorrichtung (1) gemäß Anspruch 1, wobei die Schutzvorrichtung (31) nahe einer inneren Fläche einer Seitenwand (22) des Gehäuses (2) angeordnet ist.

3. Lenkungssperrvorrichtung (1) gemäß irgendeinem der vorhergehenden Ansprüche, wobei die Schutzvorrichtung (31) eine Sperrplatte (34) aufweist, die nahe zu einer inneren Fläche einer Seitenwand (22) des Gehäuses (2) angeordnet ist in einer Nebeneinander-Weise, wobei die Sperrplatte (34) und der angewinkelte Abschnitt (35) integral gebildet sind als ein einteiliges Element mit dem angewinkelten Abschnitt (35), der zu der Sperrplatte (34) nicht parallel ist.

4. Lenkungssperrvorrichtung (1) gemäß irgendeinem der vorhergehenden Ansprüche, wobei ein Elektromotor (9) in dem Gehäuse (2) aufgenommen ist und in unmittelbarer Nähe zu der Schutzvorrichtung (31) angeordnet ist, so dass ein Abschnitt (37) der Schutzvorrichtung (31) mit einer Endfläche (51) des Elektromotors (9) in dem Gehäuse (2) in Kontakt kommt und mittels des Elektromotors (9) gestützt ist, wenn die Schutzvorrichtung (31) verschoben und/oder verformt wird mittels einer Sabotageeinwirkung von außerhalb des Gehäuses (2).

5. Lenkungssperrvorrichtung (1) gemäß irgendeinem der vorhergehenden Ansprüche, wobei die Schutzvorrichtung (31) in einer Nut (40) an der oberen Fläche des inneren Abschnitts (21) der Montagebasis (20) eingebracht ist.

## Revendications

1. Dispositif de verrouillage de direction (1) comprenant :
un logement (2) comprenant une ouverture (23) ; et
une base de support (20) accouplée au logement (2), la base de support (20) comprenant une partie intérieure (21) reçue dans le logement (2) et un connecteur (19) s'étendant vers l'extérieur à travers l'ouverture (23), et exposée sur l'extérieur du logement (2), le dispositif de verrouillage de direction (1) étant **caractérisé par**
un dispositif de protection (31) accouplé de manière fixe à la base de support (20), et agencé à l'intérieur du logement (2) en une position correspondant à l'ouverture (23) pour entraver une action malveillante sur la base de support (20) à partir de l'extérieur du logement (2), où le dispositif de protection (31) et la base de support (20) sont assemblés ensemble afin de former un assemblage d'une pièce,
où le dispositif de protection (31) est accouplé de manière fixe à la base de support (20) dans un état où le dispositif de protection (31) n'est pas en contact avec le logement (2) et est éloigné du logement (2) par un intervalle (44) entre eux,
où le dispositif de protection (31) comprend une partie coudée (35) configurée, dans un état assemblé du dispositif de protection (31) et du logement (2), pour venir en contact direct avec une surface intérieure (45) du logement (2) juste après le début d'une déformation et / ou du déplacement du dispositif de protection (31), afin de retenir de ce fait le dispositif de protection (31) dans le logement (2) dans l'état assemblé indépendamment de la déformation et / ou du déplacement du dispositif de protection (31) provoqué par un impact d'une action malveillante appliqué sur la base de support (20) à partir de l'extérieur du logement (2), et
où le dispositif de protection (31) est agencé, sur une surface supérieure de la partie intérieure (21) de la base de support (20), entre le connecteur (19) et un mécanisme de verrouillage.

2. Dispositif de verrouillage de direction (1) selon la revendication 1, où le dispositif de protection (31) est agencé proximal d'une surface intérieure d'une paroi latérale (22) du logement (2).

3. Dispositif de verrouillage de direction (1) selon l'une quelconque des revendications précédentes, où le dispositif de protection (31) comprend un panneau barrière (34) agencé proximal d'une surface intérieure d'une paroi latérale (22) du logement (2) d'une façon côte à côte, où le panneau barrière (34) et la partie coudée (35) sont formés d'une pièce en tant qu'un seul élément, la partie coudée (35) n'étant pas parallèle au panneau barrière (34).

4. Dispositif de verrouillage de direction (1) selon l'une quelconque des revendications précédentes, où un moteur électrique (9) est reçu dans le logement (2), et est agencé à proximité immédiate du dispositif de protection (31) de telle sorte qu'une partie (37) du dispositif de protection (31) entre en contact avec une surface d'extrémité (51) du moteur électrique (9) dans le logement (2), et soit supportée par le moteur électrique (9) lorsque le dispositif de protection (31) est déplacé et / ou déformé par un impact d'une action malveillante à partir de l'extérieur du logement (2).

5. Dispositif de verrouillage de direction (1) selon l'une quelconque des revendications précédentes, où le dispositif de protection (31) est inséré dans une rainure (40) sur la surface supérieure de la partie intérieure (21) de la base de support (20).
